# EUROPEAN PATENT APPLICATION

(11) **EP 4 749 722 A1**
(43) Date of publication of application: **27.05.2026**
(21) Application number: 25218208.4
(22) Date of filing: 25.11.2025
(51) Int. Cl.: H01M 4/62, H01M 4/134, H01M 4/38, H01M 10/0525

(54) **ELECTRODES OF RECHARGEABLE LITHIUM BATTERIES AND RECHARGEABLE LITHIUM BATTERIES INCLUDING THE SAME**

(30) Priority: 26.11.2024 KR 20240171517
(71) Applicant: SAMSUNG SDI CO., LTD., Yongin-si, Gyeonggi-do 17084 (KR)
(72) Inventor: Han, Imkyung, 17084 Yongin-si, Gyeonggi-do (KR)
(74) Representative: Meissner Bolte Partnerschaft mbB

(57) **Abstract**

An electrode for a rechargeable lithium battery and a rechargeable lithium battery including the electrode are disclosed. The electrode may include a current collector and an electrode active material layer on the current collector, wherein the electrode active material layer includes an electrode active material; and a polymer binder including a first repeating unit represented by Chemical Formula 1 and a second repeating unit represented by Chemical Formula 2.

## Description

### BACKGROUND

### 1. Field

The present disclosure relates to an electrode for a rechargeable lithium battery and a rechargeable lithium battery including the electrode.

### 2. Description of the Related Art

Recently, with the rapid spread of electronic devices that utilize batteries, such as mobile phones, laptop computers, and/or electric vehicles, the demand or desire for rechargeable batteries with high energy density and high capacity (e.g., high initial charge/discharge capacity) is rapidly increasing. Accordingly, research and development to improve or enhance the performance of rechargeable lithium batteries is actively underway.

A rechargeable lithium battery may include a positive electrode and a negative electrode, each including an active (e.g., electrically active) material capable of intercalating and deintercalating lithium ions, and an electrolyte solution. Electrical energy is generated through oxidation and reduction reactions when lithium ions are intercalated and deintercalated in the positive electrode and the negative electrode.

Electrolytes used in rechargeable lithium batteries may include liquid electrolytes, gel polymer electrolytes, or solid polymer electrolytes. Gel polymer electrolytes generally provide improved or enhanced safety compared to liquid electrolytes while maintaining better lithium-ion mobility than solid polymer electrolytes. However, solid polymer electrolytes offer the highest safety but generally result in reduced ion conductivity, creating a trade-off between safety and performance.

### SUMMARY

The present invention is directed to an electrode having excellent or suitable impregnation properties of the electrolyte solution and improved or enhanced lithium ionic conductivity, and a rechargeable lithium battery having excellent or suitable cycle-life characteristics and high-rate characteristics.

Specific embodiments of the present invention will be set forth in part in the description which follows and, in part, will be apparent from the description or may be learned by practice of the presented embodiments of the disclosure.

One embodiment of the present disclosure provides an electrode for a rechargeable lithium battery, including: a current collector; and an electrode active material layer on the current collector, wherein the electrode active material layer includes an electrode active material (e.g., a conductive (e.g., electrically conductive) material selected from carbon nanotubes, carbon black, graphene, or a (e.g., any suitable) combination thereof); and a polymer binder including a first repeating unit represented by Chemical Formula 1 and a second repeating unit represented by Chemical Formula 2 as set forth below.

Another embodiment of the present invention provides a rechargeable lithium battery including the electrode and the electrolyte.

The electrode according to the above respective s embodiment has excellent or suitable impregnation properties of the electrolyte solution and high lithium ionic conductivity, and a rechargeable lithium battery according to the above respective embodiment has the advantages or benefits of excellent or suitable cycle-life characteristics and high-rate capability by including the electrode.

Accordingly, an electrode structure that not only maintains mechanical integrity during repeated charge and discharge cycles but also enhances electrolyte impregnation and lithium-ion transport is provided. Incorporating a polymer binder having specific (e.g., set or predetermined) repeating units, as described herein, enables the formation of a gel state within the electrode active material layer, improving or enhancing interfacial contact with the electrolyte and reducing internal resistance. This configuration or arrangement provides a balance between structural stability and ionic conductivity, thereby contributing to improved or enhanced cycle-life characteristics and high-rate performance in rechargeable lithium batteries.

### BRIEF DESCRIPTION OF THE DRAWINGS

The accompanying drawings, together with the specification, illustrate embodiments of the subject matter of the present disclosure, and together with the description serve to explain principles of embodiments of the subject matter of the present disclosure.
FIGS. 1-4 are views schematically illustrating rechargeable lithium batteries according to example embodiments.
FIG. 5 is a dQ/dV graph when the rechargeable lithium battery cells manufactured in Example 4 and Comparative Example 1 were charged at 0.8 C.
FIG. 6 is a dQ/dV graph when the rechargeable lithium battery cells manufactured in Example 4 and Comparative Example 1 were charged at 1.5 C.
FIG. 7 is a graph evaluating the room-temperature cycle-life of the rechargeable lithium battery cells manufactured in Example 4 and Comparative Example 1.

### DETAILED DESCRIPTION

The subject matter of the present disclosure will be described more fully hereinafter with reference to the accompanying drawings, in which embodiments of the present disclosure are shown. As those skilled in the art would realize, the described embodiments may be modified in one or more suitable different ways, all without departing from the spirit or scope of the present disclosure. The drawings and description are to be regarded as illustrative in nature and not restrictive. Like reference numerals designate like elements throughout the attached drawings and the written description, and duplicative descriptions thereof may not be provided in the specification.

The terminology used herein is used to describe one or more embodiments only and is not intended to limit the scope of the present disclosure.

The utilization of "may" if (e.g., when) describing embodiments of the present disclosure refers to "one or more embodiments of the present disclosure."

In the context of the present application and unless otherwise defined, the terms "use," "using," and "used" may be considered synonymous with the terms "utilize," "utilizing," and "utilized," respectively.

As used herein, the singular forms "a," "an," and "the" are intended to include the plural forms as well, unless the context clearly indicates otherwise.

The singular expression includes the plural expression unless the context clearly dictates otherwise.

As used herein, the term "and/or" or "or" includes any and all combinations of one or more of the associated listed items. For example, "or" is not to be construed as an exclusive meaning, for example, "A or B" is construed to include A, B, A+B, and/or the like.

Throughout the present disclosure, the expressions, such as "at least one of," "one of," and "selected from," if (e.g., when) preceding a list of elements, modify the entire list of elements and do not modify the individual elements of the list. For example, "at least one of a, b, or c," "at least one selected from among a, b, and c," "at least one selected from among a to c," and/or the like indicates only a, only b, only c, both (e.g., simultaneously) a and b, both (e.g., simultaneously) a and c, both (e.g., simultaneously) b and c, all of a, b, and c, or variations thereof.

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to as being within an acceptable range of deviation for the particular value as determined by one of ordinary skill in the art, considering the measurement in question and the error associated with measurement of the particular quantity (e.g., the limitations of the measurement system). For example, "about" may refer to as being within one or more standard deviations or within ±30%, ±20%, ±10%, or ±5% of the stated value. Also, it should be understood that, even if (e.g., when) the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the present disclosure is intended to include all higher numerical limitations subsumed therein. Accordingly, applicant reserves the right to amend the disclosure, including the claims, to expressly recite any sub-range subsumed within the ranges expressly recited herein.

It will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

As used herein, "combination thereof" refers to a mixture, a laminate, a composite, a copolymer, an alloy, a blend, a reaction product, and/or the like of the constituents.

Herein, it should be understood that the terms, such as "has," "includes," "having," or "including," are intended to designate the presence of an embodied feature, number, step (e.g., act or task), element, or a (e.g., any suitable) combination thereof, but it does not preclude the possibility of the presence or addition of one or more other features, number, step (e.g., act or task), element, or a (e.g., any suitable) combination thereof. For example, it should be understood that the term "comprise(s)/comprising," "include(s)/including," or "have/has/having" specifies the presence of stated features, integers, steps (e.g., acts or tasks), operations, elements, and/or components, but do not preclude the presence or addition of one or more other features, integers, steps (e.g., acts or tasks), operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps (e.g., acts or tasks), operations, elements, and/or components, without or essentially without the presence of other features, integers, steps (e.g., acts or tasks), operations, elements, components, and/or groups thereof.

In the drawings, the thickness of layers, films, panels, regions, and/or the like may be exaggerated for clarity.

As used herein, if (e.g., when) a definition is not otherwise provided, the particle diameter may be an average particle diameter. Also, the particle diameter may refer to an average particle diameter (D₅₀), which refers to the diameter of particles having a cumulative volume of 50 volume% in the particle size distribution. The average particle diameter (D₅₀) may be measured by any suitable method that is generally available to or generally used by those skilled in the art, for example, by a particle size analyzer and/or by a transmission electron microscope (TEM) image and/or a scanning electron microscope (SEM) image. In one or more embodiments, a dynamic light-scattering (DLS) measurement device may be used to perform a data analysis, and the number of particles is counted for each particle size range. From this data, the average particle diameter (D₅₀) value may be easily obtained through a calculation. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope (SEM) image. In one or more embodiments, it may be measured using a laser diffraction method. If (e.g., when) measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D₅₀) on the basis of 50% of the particle diameter distribution in the measuring device. Also, in the present disclosure, if (e.g., when) particles are substantially cylindrical or spherical, "diameter" refers to the average diameter of such particles. If (e.g., when) the particles are non-cylindrical or irregular in shape, "diameter" refers to the average major axis length of the particles.

As used herein, if (e.g., when) specific definition is not otherwise provided, "alkyl group" refers to a C1 to C20 alkyl group, "alkenyl group" refers to a C2 to C20 alkenyl group, "cycloalkenyl group" refers to a C3 to C20 cycloalkenyl group, "heterocycloalkenyl group" refers to a C3 to C20 heterocycloalkenyl group, "aryl group" refers to a C6 to C20 aryl group, "arylalkyl group" refers to a C6 to C20 arylalkyl group, "alkylene group" refers to a C1 to C20 alkylene group, "arylene group" refers to a C6 to C20 arylene group, "alkylarylene group" refers to a C6 to C20 alkylarylene group, "heteroarylene group" refers to a C3 to C20 heteroarylene group, and "alkoxylene group" refers to a C1 to C20 alkoxylene group.

As used herein, if (e.g., when) specific definition is not otherwise provided, "substituted" refers to replacement of at least one hydrogen atom by a substituent selected from among a halogen atom (F, Cl, Br, or I), a hydroxyl group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a (e.g., any suitable) combination thereof.

As used herein, if (e.g., when) specific definition is not otherwise provided, "hetero" refers to that the chemical formula contains at least one hetero atom of at least one selected from among nitrogen (N), oxygen (O), sulfur (S), and phosphorus (P).

As used herein, if (e.g., when) specific definition is not otherwise provided, "(meth)acrylate" refers to both (e.g., simultaneously) "acrylate" and "methacrylate," and "(meth)acrylic acid" refers to both (e.g., simultaneously) "acrylic acid" and "methacrylic acid."

As used herein, if (e.g., when) specific definition is not otherwise provided, "combination" refers to mixing or copolymerization.

In chemical formulas of the present disclosure, if (e.g., when) specific definition is not otherwise provided, hydrogen is bonded at the position if (e.g., when) a chemical bond is not drawn where supposed to be given.

In the chemical formulas in the present disclosure, the '*' indicates a position where it bonds with another element.

In the present disclosure, the weight average molecular weight (*M*_{w}) may be a value measured using gel permeation chromatography (GPC), and calibration with appropriate standards such as polystyrene.

An electrode according to one or more embodiments may include an amphiphilic polymer as an electrode binder instead of a generally-used electrode binder (e.g., carboxymethyl cellulose; CMC). If (e.g., when) an electrolyte solution is injected into an electrode including the amphiphilic polymer binder, the amphiphilic polymer may be gelled.

Accordingly, the interfacial adhesive strength between the electrode active material and the polymer binder within the electrode may be greatly or substantially improved or enhanced, thereby improving or enhancing impregnation properties of the electrolyte solution, so that (e.g., such that) the movement speed of lithium ions within the electrode increases, thereby improving or enhancing the lithium ionic conductivity. In one or more embodiments, the interfacial adhesive strength between the electrode active material and the polymer binder within the electrode active material layer and the current collector may also be greatly or substantially improved or enhanced.

An electrode for a rechargeable lithium battery according to one or more embodiments may include a current collector and an electrode active material layer on the current collector, wherein the electrode active material layer includes an electrode active material (e.g., a conductive (e.g., electrically conductive) material selected from carbon nanotubes, carbon black, graphene, or a (e.g., any suitable) combination thereof); and a polymer binder including a first repeating unit represented by Chemical Formula 1 and a second repeating unit represented by Chemical Formula 2.

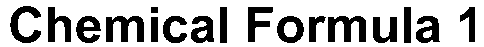

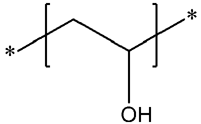

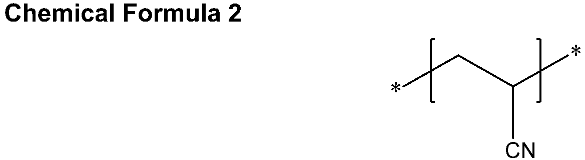

For example, the polymer binder may be dispersed in a solvent including an organic solvent and water and then introduced into an electrode slurry. If (e.g., when) an electrode is manufactured utilizing the electrode slurry and an electrolyte solution is injected into an electrode assembly manufactured utilizing the electrode, the polymer binder may be gelled.

For example, a LiPF₆ lithium salt present in the electrolyte solution may initiate a radical reaction of the -CN functional group in the polymer binder, and accordingly, a radical may be formed, and a polymerization reaction may occur between the first repeating unit and the second repeating unit of the polymer binder, thereby causing the polymer binder to be gelled.

For example, the polymer binder may be a polymer that reacts with an electrolyte solution to gel and may be in a gel state.

The polymer binder may serve to attach the negative electrode active material particles well or suitably to each other and also to attach the negative electrode active material well or suitably to the current collector.

The first repeating unit represented by Chemical Formula 1 may be polyvinyl alcohol (PVA), and the second repeating unit represented by Chemical Formula 2 may be polyacrylonitrile (PAN).

For example, the first repeating unit may be present in an amount of about 5 mol% to about 50 mol%, for example, about 10 mol% to about 50 mol%, about 20 mol% to about 50 mol%, or about 30 mol% to about 50 mol%, based on a total of 100 mol% of the first repeating unit and the second repeating unit in the polymer binder.

For example, the second repeating unit may be present in an amount of about 50 mol% to about 95 mol%, for example, about 50 mol% to about 90 mol%, about 50 mol% to about 80 mol%, or about 50 mol% to about 70 mol%, based on a total of 100 mol% of the first repeating unit and the second repeating unit in the polymer binder.

If (e.g., when) the amounts (mol%) of the first repeating unit and the second repeating unit satisfy the foregoing range, an electrode having excellent or suitable impregnation properties of the electrolyte solution and high lithium ionic conductivity may be implemented.

For example, the polymer binder may be represented by Chemical Formula 3.

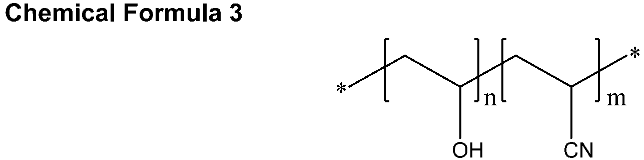

In Chemical Formula 3, n may be a natural number in the range of 10 to 500, and m may be a natural number in the range of 10 to 500, inclusive of the respective endpoints.

The n:m may be in a range of about 5:95 to about 50:50, about 10:90 to about 50:50, about 20:80 to about 50:50, about 30:70 to about 50:50, or about 40:60 to about 50:50. If (e.g., when) the foregoing ranges are satisfied, an electrode having excellent or suitable impregnation properties of the electrolyte solution and high lithium ionic conductivity may be realized.

For example, the polymer binder may be an amphiphilic polymer, and the moiety formed by carbon-carbon bonds may be a hydrophobic moiety with relatively low polarity, and the moiety having an -OH functional group and a -CN functional group may be a hydrophilic moiety with relatively high polarity.

For example, a weight average molecular weight (*M*_{w}) of the polymer binder may be in a range of about 80,000 g/mol to about 200,000 g/mol, for example, about 100,000 g/mol to about 180,000 g/mol or about 120,000 g/mol to about 150,000 g/mol.

For example, a viscosity of the polymer binder may be in a range of about 1000 cP to about 2000 cP, for example, about 1200 cP to about 1800 cP or about 1400 cP to about 1600 cP.

If (e.g., when) the weight average molecular weight and the viscosity of the polymer binder satisfy the foregoing numerical ranges, the polymer binder may be optimally or suitably gelled, and the interfacial adhesive strength between the electrode active material in the electrode and the polymer binder may be greatly or substantially improved or enhanced, thereby realizing excellent or suitable impregnation properties of the electrolyte solution.

For example, the polymer binder may be in an amount of about 0.1 wt% to about 5 wt%, for example, about 0.2 wt% to about 4 wt%, about 0.2 wt% to about 3 wt%, about 0.2 wt% to about 2 wt%, about 0.25 wt% to about 2 wt%, or about 0.25 wt% to about 1 wt%, based on a total of 100 wt% of the electrode active material layer. If (e.g., when) the polymer binder is in the foregoing content (e.g., amount) range, electrode adhesive strength may be improved or enhanced and impregnation properties of the electrolyte solution may be improved or enhanced without reducing capacity (e.g., initial charge/discharge capacity).

For example, a mixture density of the electrode may be in a range of about 1.6 g/cc to about 2.0 g/cc, for example, about 1.67 g/cc to about 1.9 g/cc, about 1.68 g/cc to about 1.8 g/cc, or about 1.68 g/cc to about 1.7 g/cc. The electrode may realize a high electrode density by including a polymer binder according to one or more embodiments of the invention, thereby improving or enhancing the capacity (e.g., the initial charge/discharge capacity) and energy density of a rechargeable lithium battery.

For example, a porosity of the electrode may be in a range of about 18% to about 20%, for example, about 18.5% to about 20% or about 19% to about 20%. The electrode may exhibit excellent or suitable porosity by including a polymer binder according to one or more embodiments, and an electrode satisfying the porosity within the foregoing range may implement a rechargeable lithium battery having excellent or suitable impregnation properties of the electrolyte solution and excellent or suitable rapid charging characteristics.

The porosity of the electrode may be measured using the mercury adsorption method. For example, a dried electrode sample may be prepared, mercury may be injected into the electrode under vacuum, the pressure may be increased stepwise, and an amount of mercury penetration for each pressure may be measured. Using the pressure and mercury intrusion data, the pore size distribution and total pore volume may be calculated, and then a total pore volume for the electrode sample may be calculated to measure a porosity of an electrode.

For example, the electrode may be either a positive electrode or a negative electrode, or both (e.g., simultaneously), and the electrode active material may be a positive electrode active material, a negative electrode active material, or both (e.g., simultaneously).

In one or more embodiments, the electrode active material layer may have an elastic modulus in a range of about 50 MPa to about 150 MPa.

### Negative Electrode

For example, the electrode may be a negative electrode, and the electrode active material may be a negative electrode active material, and thus the following description focuses on the negative electrode.

For example, the negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example, crystalline carbon, amorphous (e.g., non-crystalline) carbon, or a (e.g., any suitable) combination thereof. The crystalline carbon may be graphite, such as non-shaped, sheet-shaped (e.g., substantially sheet-shaped), flake-shaped (e.g., substantially flake-shaped), sphere-shaped (e.g., substantially sphere-shaped), or fiber-shaped (e.g., substantially fiber-shaped) natural graphite and/or artificial graphite, and the amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (wherein 0 < x ≤ 2; e.g., SiO₂), a Si-Q alloy (wherein Q is selected from among an alkali metal, an alkaline-earth metal, a Group 13 element, a Group 14 element (excluding (e.g., not including) Si), a Group 15 element, a Group 16 element, a transition metal, a rare earth element, and a (e.g., any suitable) combination thereof), or a (e.g., any suitable) combination thereof. The Sn-based negative electrode active material may include Sn, SnOₓ (wherein 0 < x ≤ 2; e.g., SnO₂), a Sn-based alloy, or a (e.g., any suitable) combination thereof.

The silicon-carbon composite may be a composite of silicon and amorphous (e.g., non-crystalline) carbon. According to one or more embodiments, the silicon-carbon composite may be in a form of silicon particles and amorphous (e.g., non-crystalline) carbon coated on the surface of the silicon particles. For example, it may include a secondary particle (core) in which primary silicon particles are assembled, and an amorphous (e.g., non-crystalline) carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on a surface of the core.

The Si-based negative electrode active material or the Sn-based negative electrode active material may be used in combination with a carbon-based negative electrode active material.

For example, the negative electrode active material may be in an amount of about 90 wt% to about 99.9 wt%, based on a total of 100 wt% of the negative electrode active material layer.

For example, the negative electrode active material layer may further include other negative electrode binders in addition to the polymer binder as described in one or more embodiments.

The other negative electrode binder may be a non-aqueous (e.g., water-insoluble) binder, an aqueous (e.g., water-soluble) binder, a dry binder, or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a (e.g., any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a (e.g., any suitable) combination thereof.

If (e.g., when) an aqueous (e.g., water-soluble) binder is used as the negative electrode binder, a cellulose-based compound capable of imparting or increasing viscosity may be further included. The cellulose-based compound may include at least one of carboxymethyl cellulose, hydroxypropyl methylcellulose, methyl cellulose, or an alkali metal salt thereof. The alkali metal may include sodium (Na), potassium (K), or lithium (Li).

The dry binder may be a polymer material capable of being fibrous, and may be, for example, polytetrafluoroethylene, polyvinylidene fluoride, a polyvinylidene fluoride-hexafluoropropylene copolymer, polyethylene oxide, or a (e.g., any suitable) combination thereof.

For example, the negative electrode active material layer may further include a conductive (e.g., electrically conductive) material (e.g., electron conductor).

The conductive material may be included to provide electrode conductivity (e.g., electrical conductivity), and any suitable electrically conductive material may be used as a conductive material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminum silver, and/or the like; a conductive (e.g., electrically conductive) polymer, such as polyphenylene and/or a polyphenylene derivative; or a (e.g., any suitable) mixture thereof.

An amount of the conductive material may be in a range of about 0.01 wt% to about 5 wt%, based on a total of 100 wt% of the negative electrode active material layer.

The negative electrode current collector may include a copper foil, a nickel foil, a stainless-steel foil, a titanium foil, a nickel foam, a copper foam, a polymer substrate coated with a conductive (e.g., electrically conductive) metal, and a (e.g., any suitable) combination thereof.

In one or more embodiments, the negative electrode active material layer may have an elastic modulus in a range of about 50 MPa to about 150 MPa.

### Rechargeable Lithium Battery

A rechargeable lithium battery according to one or more embodiments may include the electrode and the electrolyte solution as described in one or more embodiments.

For example, the rechargeable lithium battery may include the negative electrode as described in one or more embodiments; a positive electrode including a positive electrode active material; a separator between the negative electrode and the positive electrode; and an electrolyte solution.

If (e.g., when) manufacturing a rechargeable lithium battery, an electrode assembly including a positive electrode, a negative electrode, and a separator between the positive electrode and the negative electrode may be manufactured, and if (e.g., when) the electrolyte solution is injected into the electrode assembly, the polymer binder in the electrode may be gelled.

A rechargeable lithium battery including an electrode according to one or more embodiments may have excellent or suitable rapid charge/discharge efficiency and cycle-life characteristics because the lithium precipitation effect is dominant during battery operation.

Hereinafter, components other than the negative electrode as described in one or more embodiments are described in more detail.

### Positive Electrode

The positive electrode for a rechargeable lithium battery may include a current collector and a positive electrode active material layer on the current collector. The positive electrode active material layer may include a positive electrode active material and may include the polymer binder as described in one or more embodiments. The polymer binder may be substantially the same as described in one or more embodiments and may be applied to the positive electrode as well.

For example, the positive electrode may further include an additive that may serve as a sacrificial positive electrode.

For example, the positive electrode active material may be a compound (e.g., a lithiated intercalation compound) capable of intercalating and deintercalating lithium. For example, at least one compound oxide of lithium and a metal selected from among cobalt, manganese, nickel, and combinations thereof may be used.

The composite oxide may be a lithium transition metal composite oxide, and examples of the composite oxide may include a lithium nickel-based oxide, a lithium cobalt-based oxide, a lithium manganese-based oxide, a lithium iron phosphate-based compound, a cobalt-free lithium nickel-manganese oxide, or a (e.g., any suitable) combination thereof.

As an example, a compound represented by any one selected from among the following chemical formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the chemical formulas, A may be nickel (Ni), cobalt (Co), manganese (Mn), or a (e.g., any suitable) combination thereof; X may be Al, Ni, Co, Mn, chromium (Cr), iron (Fe), Mg, Sr, vanadium (V), a rare earth element, or a (e.g., any suitable) combination thereof; D may be oxygen (O), fluorine (F), sulfur (S), phosphorus (P), or a (e.g., any suitable) combination thereof; G may be Al, Cr, Mn, Fe, Mg, lanthanum (La), cerium (Ce), Sr, V, or a (e.g., any suitable) combination thereof; and L¹ may be Mn, Al, or a (e.g., any suitable) combination thereof.

For example, the positive electrode active material may be a high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on a total of 100 mol% of the metal excluding (e.g., not including) lithium in the lithium transition metal composite oxide. The high-nickel positive electrode active material may achieve high capacity (e.g., high initial charge/discharge capacity) and may be applied to high-capacity (e.g., high initial charge/discharge capacity), high-density rechargeable lithium batteries.

An amount of the positive electrode active material may be in a range of about 90 wt% to about 99.5 wt%, based on a total of 100 wt% of the positive electrode active material layer.

For example, the positive electrode active material layer may further include other positive electrode binders in addition to the polymer binder as described in one or more embodiments. The polymer binder and other positive electrode binders may serve to adhere the positive electrode active material particles well or suitably to each other and also to adhere the positive electrode active material well or suitably to a current collector.

Examples of the other positive electrode binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but embodiments of the present disclosure are not limited thereto.

For example, the positive electrode active material layer may further include a conductive (e.g., electrically conductive) material (e.g., electron conductor).

The conductive material may be used to impart or increase conductivity (e.g., electrical conductivity) to the electrode, and any suitable material that does not cause a chemical change (e.g., an undesirable chemical change) and conducts electrons may be used in the rechargeable lithium battery. Examples of the conductive material may include a carbon-based material, such as natural graphite, artificial graphite, carbon black, acetylene black, Ketjen black, a carbon fiber, a carbon nanofiber, and carbon nanotube; a metal-based material containing copper, nickel, aluminum, silver, and/or the like, in a form of a metal powder and/or a metal fiber; a conductive (e.g., electrically conductive) polymer, such as polyphenylene and/or a polyphenylene derivative; or a (e.g., any suitable) mixture thereof.

An amount of the conductive material may be in a range of about 0.5 wt% to about 5 wt%, based on a total of 100 wt% of the positive electrode active material layer.

The positive electrode current collector may be Al, but embodiments of the present disclosure are not limited thereto.

### Electrolyte Solution

The electrolyte solution for a rechargeable lithium battery normally includes a non-aqueous (e.g., water-insoluble) organic solvent and a lithium salt.

The non-aqueous organic solvent serves as a medium to transmit ions taking part in the electrochemical reaction of a rechargeable lithium battery.

The non-aqueous organic solvent may be a carbonate-based solvent, an ester-based solvent, an ether-based solvent, a ketone-based solvent, an alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R is a C2 to C20 linear, branched, or cyclic hydrocarbon group, a double bond, an aromatic ring, or an ether bond, and/or the like); amides, such as dimethylformamide and/or the like; dioxolanes, such as 1,3-dioxolane, 1,4-dioxolane, and/or the like; sulfolanes; and/or the like.

The non-aqueous organic solvent may be used alone or in a mixture of two or more types (kinds).

In one or more embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a rechargeable lithium battery, enables a basic operation of a rechargeable lithium battery, and may improve or enhance transportation of the lithium ions between the positive electrode and the negative electrode. For example, the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), x and y are integers of 1 to 20, lithium trifluoromethane sulfonate, lithium tetrafluoroethanesulfonate, lithium difluorobis(oxalato)phosphate (LiDFBOP), and lithium bis(oxalato) borate (LiBOB).

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film, such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, or a (e.g., any suitable) combination thereof on a surface (e.g., one surface or both surfaces (e.g., two opposite surfaces) of the porous substrate.

The porous substrate may be a polymer film formed or composed of any one selected among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (PTFE; e.g., Teflon^{™}), or a copolymer or mixture of two or more thereof.

The organic material may include a polyvinylidene fluoride-based polymer and/or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a (e.g., any suitable) combination thereof, but embodiments of the present disclosure are not limited thereto.

The organic material and the inorganic material may be mixed in one coating layer, or a coating layer including an organic material and a coating layer including an inorganic material may be stacked.

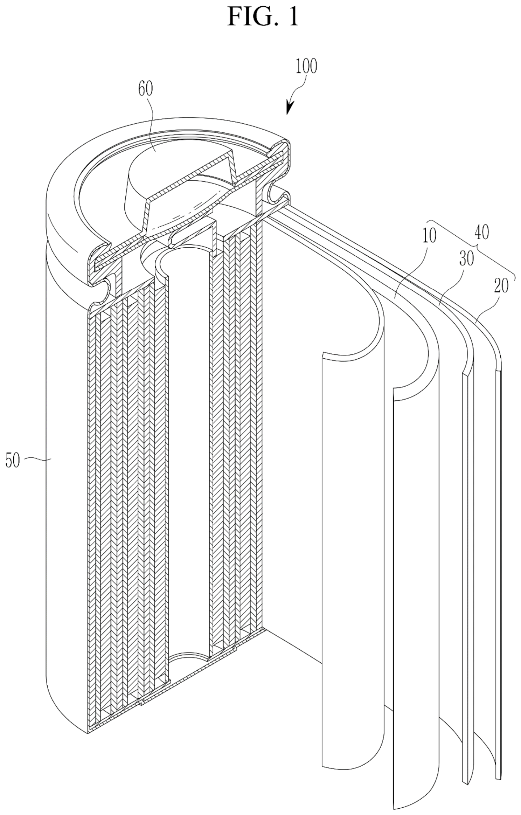

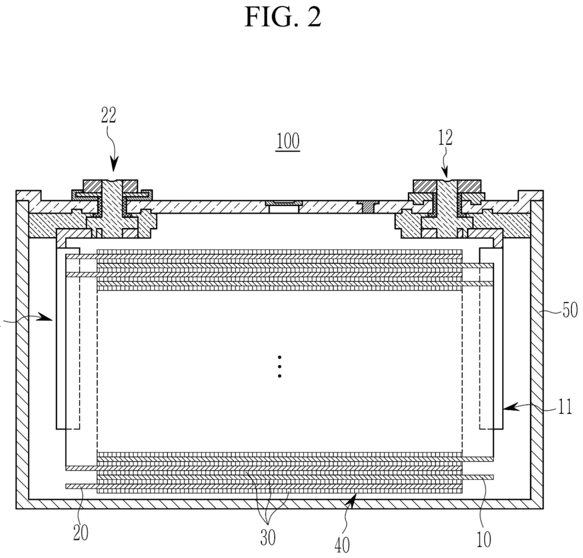

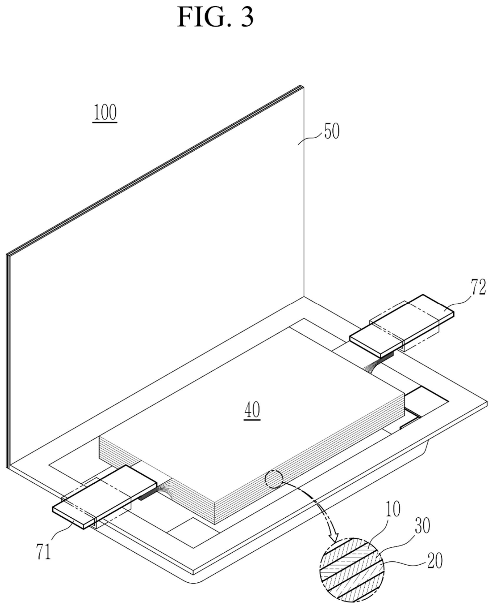

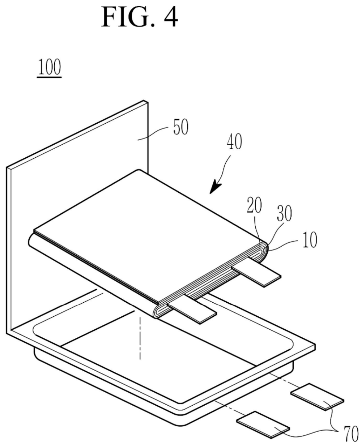

The rechargeable lithium battery may be classified into cylindrical, prismatic, pouch, coin, and/or the like depending on its shape. FIGS. 1 to 4 are schematic views illustrating rechargeable lithium batteries according to example embodiments. FIG. 1 illustrates a cylindrical battery, FIG. 2 illustrates a prismatic battery, and FIGS. 3 and 4 illustrate pouch-type (kind) batteries. Referring to FIGS. 1 to 4, the rechargeable lithium battery 100 may include an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution. The rechargeable lithium battery 100 may include a sealing member 60 that seals the case 50 as illustrated in FIG. 1. In FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 may include an electrode tab 70, for example, a positive electrode tab 71 and a negative electrode tab 72 serving as an electrical path to induce the current formed in the electrode assembly 40 to the outside.

The rechargeable lithium battery according to one or more embodiments may be applied to automobiles, mobile phones, and/or one or more suitable types (kinds) of electrical devices, but embodiments of the present disclosure are not limited thereto.

Examples and Comparative Examples of the present disclosure are described in more detail herein. However, the following examples are only examples of the present disclosure, and embodiments of the present disclosure are not limited to the following examples.

### Examples

### Example 1

### (1) Manufacturing of Negative Electrode

First, a polymer binder represented by Chemical Formula 3 (a weight average molecular weight: 150,000 g/mol; viscosity: 1450 cP) was prepared by dispersion in a mixed solvent of an organic solvent (ethanol or acetone) and water.

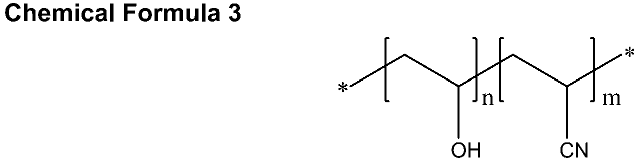

Herein, In Chemical Formula 3, n:m was 40:60.

Subsequently, 0.25 wt% of the prepared polymer binder, 99.74 wt% of a graphite negative electrode active material, and 0.01 wt% of a carbon nanotube (CNT) conductive (e.g., electrically conductive) material were mixed in a water solvent to prepare a negative electrode active material layer slurry.

The negative electrode active material layer slurry was coated on a copper foil current collector and then, dried and compressed to manufacture a negative electrode in which a negative electrode active material layer was formed on the current collector.

### (2) Manufacturing of Rechargeable Lithium Battery Cell

96 wt% of LiCoO₂, 2 wt% of Ketjen black, and 2 wt% of polyvinylidene fluoride were mixed in an N-methyl pyrrolidone solvent to prepare a positive electrode active material slurry. The positive electrode active material slurry was coated on an Al current collector and then dried and compressed to manufacture a positive electrode.

Subsequently, an electrolyte solution was obtained by mixing ethylene carbonate (EC), ethylmethyl carbonate (EMC), and dimethyl carbonate (DMC) in a volume ratio of 2:4:4 and dissolving LiPF₆ lithium salt at a concentration of 1.15 M in the mixed organic solvent.

The manufactured positive and negative electrodes were assembled with a separator made of a polyethylene material to manufacture an electrode assembly, which was housed in a prismatic case, and the electrolyte solution was injected thereinto to manufacture a rechargeable lithium battery cell.

### Examples 2 to 4

A negative electrode and a rechargeable lithium battery cell including the negative electrode were manufactured in substantially the same manner as in Example 1 except that the contents (e.g., amounts) (wt%) of the polymer binder, the negative electrode active material, and the conductive material in the negative electrode active material layer were changed as shown in Table 1.

### Comparative Example 1: Conventional CMC as Negative Electrode Binder

A negative electrode and a rechargeable lithium battery cell including the negative electrode were manufactured in substantially the same manner as in Example 1 except that 1 wt% of carboxymethyl cellulose was used instead of the polymer binder represented by Chemical Formula 3.

### Comparative Example 2

A negative electrode and a rechargeable lithium battery cell including the negative electrode were manufactured in substantially the same manner as in Example 1 except that 1 wt% of the polymer binder represented by Chemical Formula 4 was used instead of the polymer binder represented by Chemical Formula 3.

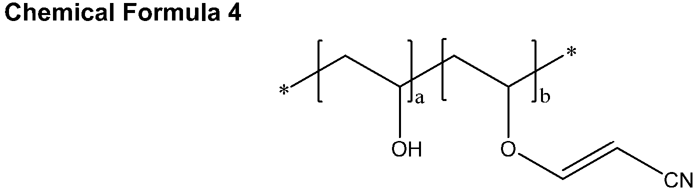

Herein, in Chemical Formula 4, a:b was 40:60.

Also, whether gelation occurred or not in the negative electrodes according to Examples 1 to 4 and Comparative Examples 1 to 2 was observed, and the results are shown in Table 1.

Whether the gelation occurred or not was evaluated by respectively curing the negative electrode active material layer slurries of Examples 1 to 4 and Comparative Examples 1 to 2 and observing them with naked eyes.

For example, if (e.g., when) each of the negative electrode active material layer slurries of Examples 1 to 4 and Comparative Examples 1 to 2 was checked with respect to fluidity, if (e.g., when) it was transparent or semitransparent and had almost little fluidity, '∘ (excellent)' was given, if (e.g., when) it was a little opaque and had limited fluidity, '△ (normal)' was given, but if (e.g., when) it was very opaque or had a separated phase and considerable fluidity, 'X (insufficient)' was given, which are shown in Table 1.

**Table 1**

| | Polymer binder (wt%) | Negative electrode active material (wt%) | Conductive (e.g., electrically conductive) material (wt%) | Gelled or not |
|---|---|---|---|---|
| Example 1 | 0.25 | 99.74 | 0.01 | △ |
| Example 2 | 0.5 | 99.49 | 0.01 | ○ |
| Example 3 | 0.75 | 99.24 | 0.01 | ○ |
| Example 4 | 1.0 | 98.99 | 0.01 | ○ |
| Comparative Example 1 | carboxymethyl cellulose, 1.0 | 98.99 | 0.01 | X |
| Comparative Example 2 | Chemical Formula 4, 1.0 | 98.99 | 0.01 | △ |

### Evaluation Examples

### Evaluation Example 1: Electrode Adhesive Strength

In the negative electrodes of Example 4 and Comparative Example 1, adhesive strength between the current collector and the negative electrode active material layer was measured by using a UTM tensile strength tester. After attaching a slide glass (length x width = 7 cm x 2.5 cm) on one side of a double-sided adhesive tape (length x width = 4 cm x 2.5 cm), each of the negative electrodes (length x width = 7 cm x 2.5 cm) was attached to the other side of the double-sided adhesive tape to prepare a sample. The sample was mounted on a UTM tensile strength tester to measure adhesive strength by peeling off the negative electrode from the slide glass at a peeling angle of 180°, a peeling temperature of 25 °C, and a peeling speed of 100 mm/min, and the results are shown in Table 2.

**Table 2**

| | Comparative Example 1 | Example 4 |
|---|---|---|
| Adhesive strength (gf/mm) | 0.43 | 0.58 |

Referring to Tables 1 and 2, the negative electrode of Example 4, to which a polymer binder capable of gelation with an electrolyte solution was applied, exhibited very excellent or suitable adhesive strength between the negative electrode active material layer and the current collector, which confirmed that the negative electrode of Example 4 had more excellent or suitable adhesive strength than that of Comparative Example 1.

### Evaluation Example 2: Evaluation of Mechanical Properties of Electrodes

The negative electrodes of Examples 1 to 4 were evaluated with respect to active mass density (g/cc), and the results are shown in Table 3. Also, the negative electrodes of Examples 1 to 4 were measured with respect to elastic modulus (mPa) and porosity (%), and the results are shown in Table 3.

The elastic modulus of the negative electrodes was measured through a tensile test, and the porosity was measured by a mercury adsorption method.

**Table 3**

| | Electrode active mass density (g/cc) | Elastic modulus (mPa) | Porosity (%) |
|---|---|---|---|
| Example 1 | 1.67 | 10.4 | 18.27 |
| Example 2 | 1.68 | 54.3 | 19.06 |
| Example 3 | 1.67 | 82.8 | 19.38 |
| Example 4 | 1.68 | 120.6 | 19.53 |
| Comparative Example 1 | 1.66 | immeasurable | 18.4 |
| (CMC) | | | |
| Comparative Example 2 (Chemical Formula 4) | 1.66 | 275.4 | 18.4 |

Referring to Tables 1 and 3, Examples 2 to 4 were confirmed to exhibit an elastic modulus of greater than 50 mPa and thus sufficient or suitable mechanical strength and also, porosity of greater than 19% and thus excellent or suitable impregnation properties in an electrolyte solution.

In one or more embodiments, referring to Tables 1 and 3, because the binder used in the negative electrode of Comparative Example 1 was not gelled, interfacial adhesive strength between the electrode active material and the polymer binder in the electrode was significantly or substantially deteriorated or reduced, resulting in too insufficient or unsuitable mechanical strength to measure an elastic modulus.

Furthermore, referring to Tables 1 and 3, because the binder (Chemical Formula 4) used in the negative electrode of Comparative Example 2 was capable of being gelled, but cross-linking points were excessively or substantially generated due to the presence of a double bond functional group, the negative electrode of Comparative Example 2 had an excessively or substantially high elastic modulus but lower porosity than those of Examples 2 to 4, resultantly exhibiting deteriorated impregnation properties in an electrolyte solution.

### Evaluation Example 3: dQ/dV Evaluation

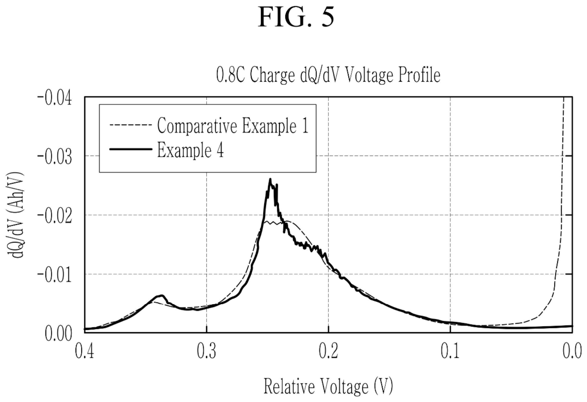

The rechargeable lithium battery cells of Example 4 and Comparative Example 1 were charged to an upper limit voltage of 4.3 V at a constant current of 0.8 C and to 0.05 C at the constant voltage and then, discharged to a cut-off voltage of 3.0 V at 0.2 C, wherein dQ/dV graphs according to a relative voltage were shown in FIG. 5.

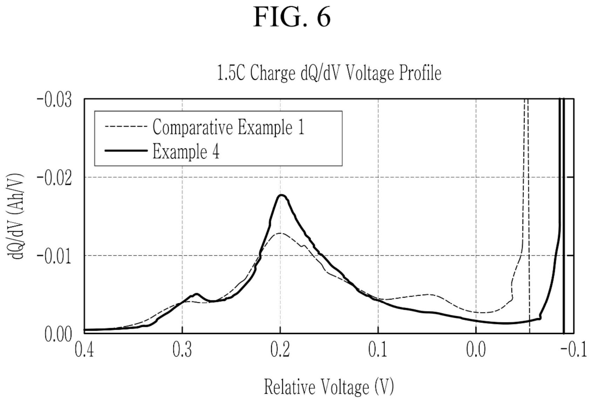

In one or more embodiments, the rechargeable lithium battery cells of Example 4 and Comparative Example 1 were charged to an upper limit voltage of 4.3 V at a constant current of 1.5 C and to 0.05 C at the constant voltage and then, discharged to a cut-off voltage of 3.0 V at 0.2 C, wherein dQ/dV graphs according to a relative voltage were shown in FIG. 6.

Referring to FIG. 5, the cells of Example 4 and Comparative Example 1 were confirmed to exhibit a peak due to LiC₆ when the relative voltage was about 0.25 V. Referring to FIG. 5, Example 4 exhibited a higher LiC₆ peak intensity than Comparative Example 1 and thus was expected to have excellent or suitable rapid efficiency characteristics due to excellent or suitable lithium precipitation effects.

Referring to FIG. 6, the cells of Example 4 and Comparative Example 1 exhibited a peak due to LiC₆, when the relative voltage was about 0.2 V. Referring to FIG. 6, Example 4 exhibited stronger LiC₆ peak intensity than Comparative Example 1 and thus was expected to have excellent or suitable rapid efficiency characteristics due to excellent or suitable lithium precipitation effects,

### Evaluation Example 4: Evaluation of Room-temperature Cycle-life

### Characteristics

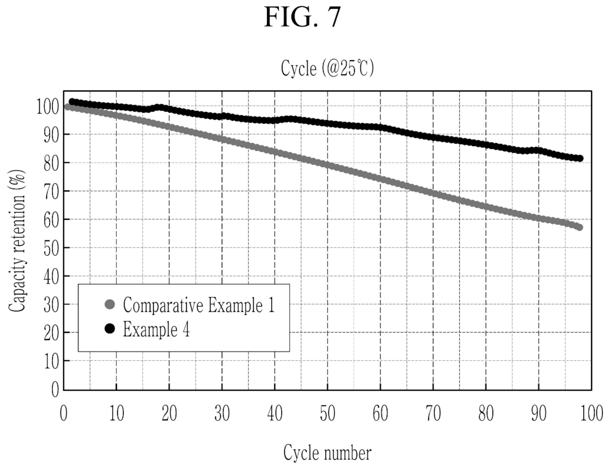

The rechargeable lithium battery cells of Example 4 and Comparative Example 1 were constant current-charged to a voltage of 4.2 V at a rate of 0.5 C and subsequently, cut off at a rate of 0.025 C in the constant voltage mode at 25 °C. Subsequently, the cells were discharged to 2.5 V at a rate of 0.5 C, and this cycle was 100 times repeated to evaluate a capacity retention rate (%) according to the number of cycles, that is, cycle-life characteristics, and the results are shown in FIG. 7.

Referring to FIG. 7, Example 4 exhibited superbly excellent or suitable cycle-life characteristics, compared with Comparative Example 1.

**Evaluation Example 5: Evaluation of Formation Charge/discharge Capacity**

The rechargeable lithium battery cells of Example 4 and Comparative Example 2 were constant current-charged to a voltage of 4.2 V at a rate of 0.2 C and subsequently, constant voltage-charged and then, cut off at a rate of 0.025 C at 25 °C. Subsequently, the cells were discharged to 2.5 V at a rate of 0.2 for formation charge and discharge. Herein, the cells were measured with respect to formation charge capacity and formation discharge capacity, which are shown in Table 4.

**Table 4**

| | Formation charge capacity (mAh/g) | Formation discharge capacity (mAh/g) |
|---|---|---|
| Example 4 | 81.2 | 80.8 |
| Comparative Example 2 | 73.8 | 72.3 |

Referring to Tables 3 and 4, the negative electrode of Comparative Example 2, which had excellent or suitable mechanical strength and suppressed or reduced expansion of a negative electrode active material during the battery operation but rather had too high strength and a low restoring force when the negative electrode active material shrank, was confirmed to exhibit much deteriorated initial charge and discharge capacity characteristics, compared with Example 4.

For example, taken together, the results of Tables 1-4 and FIGS. 5-7 demonstrate that electrodes including the polymer binder of the present disclosure achieve a desirable balance of properties: sufficient or suitable mechanical strength (elastic modulus >50 MPa) without excessive or substantial rigidity, high porosity (>19%) for excellent or suitable electrolyte impregnation, and superior interfacial adhesion. These structural advantages or benefits translate into improved or enhanced electrochemical performance, including enhanced lithium-ion transport, higher initial charge/discharge capacity, and outstanding cycle-life characteristics compared to electrodes utilizing the binders that are generally available or generally used or the binders with excessive or substantial cross-linking. Accordingly, the disclosed electrode composition and structure provide a significant improvement or enhancement in both (e.g., simultaneously) safety and performance for rechargeable lithium batteries.

A battery manufacturing device, a battery management system (BMS) device, and/or any other relevant devices or components according to one or more embodiments of the present disclosure may be implemented utilizing any suitable hardware, firmware (e.g., an application-specific integrated circuit), software, and/or a (e.g., any suitable) combination of software, firmware, and hardware. For example, one or more suitable components of the device may be provided on one integrated circuit (IC) chip or on separate IC chips. Further, one or more suitable components of the device may be implemented on a flexible printed circuit film, a tape carrier package (TCP), a printed circuit board (PCB), and/or provided on one substrate. Further, the one or more suitable components of the device may be a process or thread, running on one or more processors, in one or more computing devices, executing computer program instructions and interacting with other system components to perform the one or more suitable functionalities described herein. The computer program instructions may be stored in a memory which may be implemented in a computing device utilizing a standard memory device, such as, for example, a random access memory (RAM). The computer program instructions may also be stored in other non-transitory computer readable media, such as, for example, a CD-ROM, a flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

While the subject matter of the present disclosure has been described in connection with what is presently considered to be practical embodiments, it is to be understood that the present disclosure is not limited to the disclosed embodiments. In contrast, it is intended to cover one or more suitable modifications and equivalent arrangements included within the spirit and scope of the appended claims and equivalents thereof. It therefore will be understood that one or more embodiments described herein are just illustrative but not limitative in all aspects.

### List of reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. An electrode comprising a current collector; and
an electrode active material layer on the current collector,
wherein the electrode active material layer comprises:
an electrode active material; and
a polymer binder comprising a first repeating unit represented by Chemical Formula 1 and a second repeating unit represented by Chemical Formula 2: 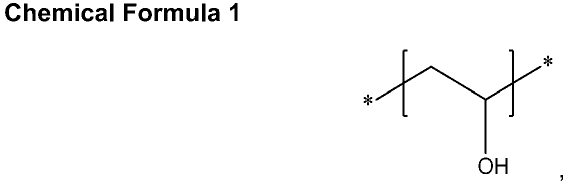
and 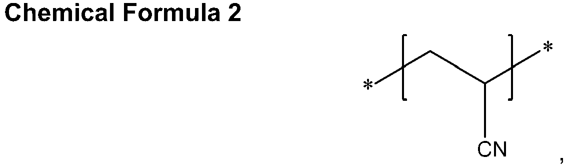
and
wherein the electrode is an electrode for a rechargeable lithium battery.

2. The electrode as claimed in claim 1, wherein the polymer binder is in a gel state.

3. The electrode as claimed in claim 1 or 2, wherein the first repeating unit is present in an amount of 5 mol% to 50 mol%, based on a total of 100 mol% of the first repeating unit and the second repeating unit in the polymer binder.

4. The electrode as claimed in any of claims 1-3, wherein the second repeating unit is present in an amount of 50 mol% to 95 mol%, based on a total of 100 mol% of the first repeating unit and the second repeating unit in the polymer binder.

5. The electrode as claimed in any of claims 1-4, wherein the polymer binder is represented by Chemical Formula 3: 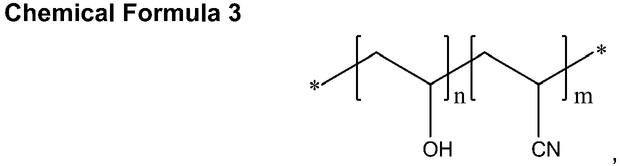 and
wherein, in Chemical Formula 3,
n is a natural number of 10 to 500,
m is a natural number of 10 to 500, and
n:m is in a range of 5:95 to 50:50.

6. The electrode as claimed in any of claims 1-5, wherein a weight average molecular weight of the polymer binder is in a range of 80,000 g/mol to 200,000 g/mol.

7. The electrode as claimed in any of claims 1-6, wherein a viscosity of the polymer binder is in a range of 1000 cP to 2000 cP.

8. The electrode as claimed in any of claims 1-7, wherein the polymer binder is comprised in an amount of 0.1 wt% to 5 wt%, based on a total of 100 wt% of the electrode active material layer.

9. The electrode as claimed in any of claims 1-8, wherein the electrode active material layer is a negative electrode active material layer and
the electrode active material is a negative electrode active material.

10. The electrode as claimed in claim 9, wherein the negative electrode active material comprises a carbon-based negative electrode active material, a Si-based negative electrode active material, a Sn-based negative electrode active material, or a combination thereof, preferably wherein the Si-based negative electrode active material comprises silicon, a silicon-carbon composite, SiOₓ (0 < x ≤ 2), a Si-Q alloy (wherein Q is selected from among an alkali metal, an alkaline-earth metal, a Group 13 element, a Group 14 element (excluding Si), a Group 15 element, a Group 16 element, a transition metal, a rare earth element, and a combination thereof), or a combination thereof.

11. The electrode as claimed in claim 9 or 10, wherein the negative electrode active material is comprised in an amount of 90 wt% to 99.9 wt%, based on a total of 100 wt% of the negative electrode active material layer.

12. The electrode as claimed in any of claims 1-11, wherein a mixture density of the electrode is in a range of 1.6 g/cc to 2.0 g/cc.

13. The electrode as claimed in any of claims 1-12, wherein a porosity of the electrode is in a range of 18% to 20%.

14. The electrode as claimed in any of claims 1-13, wherein
i) the polymer binder is applied to form a gel upon contact with an electrolyte solution; and/or
ii) wherein the electrode active material layer further comprises a conductive material selected from carbon nanotubes, carbon black, graphene, or a combination thereof; and/or
iii) wherein the electrode active material layer has an elastic modulus in a range of 50 MPa to 150 MPa; and/or
iv) wherein the electrode active material layer has a porosity in a range of 18% to 20% and a mixture density in a range of 1.6 g/cc to 2.0 g/cc

15. A rechargeable lithium battery comprising the electrode as claimed in any of claims 1-14 and an electrolyte solution, preferably wherein the electrolyte solution comprises a non-aqueous organic solvent and a lithium salt.
